# EUROPÄISCHE PATENTSCHRIFT

(11) **EP 3 273 769 B1**
(45) Veröffentlichungstag und Bekanntmachung des Hinweises auf die Patenterteilung: **06.11.2019**
(21) Anmeldenummer: 16717567.8
(22) Anmeldetag: 24.03.2016
(51) Int. Cl.: A01D 80/02, A01D 89/00

(54) **ZINKENTRÄGER**
TINE SUPPORT
PORTE-DENTS

(30) Priorität: 26.03.2015 DE 102015205561
(43) Veröffentlichungstag der Anmeldung: 31.01.2018
(73) Patentinhaber: Reiter, Thomas, 4707 Schlüsselberg (AT)
(72) Erfinder: Reiter, Thomas, 4707 Schlüsselberg (AT)
(74) Vertreter: Puschmann Borchert Bardehle Patentanwälte Partnerschaft mbB
(86) Internationale Anmeldenummer: PCT/EP2016/056600
(87) Internationale Veröffentlichungsnummer: WO 2016/151095

(56) Entgegenhaltungen:
- EP-A1- 2 147 590
- EP-A1- 2 815 639
- DE-A1-102006 027 078
- DE-U- 1 872 594
- US-A- 2 527 887
- US-A1- 2014 260 171

## Beschreibung

Die Erfindung betrifft einen Zinkenträger für einen Erntegutaufnehmer gemäß dem Oberbegriff des Anspruchs 1.

Die US 2014 / 02G0171 A1 offenbart ein Zinkenelement für einen Erntegutaufnehmer, das einzeln mittels eines Spannrings an ein Rohr geklemmt werden kann, wo es dann verschraubt wird und das Rohr einen Teil einer Haspel darstellt, die mit einer Welle gedreht wird.

Die EP 2 815 639 A1 offenbart eine Haspel eines Erntegutaufnehmers mit einer Vielzahl von Zinkenträger, an welchen einzelne Zinkenträger zur Lagerung einzelner Zinken angeschraubt sind. Eine Ähnliche Anordnung, bei welcher die Zinken einzeln an einer Trommel befestigt werden offenbart die DE 10 2013 109 684 A1.

Aus der DE 10 2006 027 078 A1 ist ein Zinkenträger für einen Erntegutaufnehmer bekannt, der Doppelzinken aufweist, die über kreisförmige Halterungselemente mit einer Welle verbunden sind.

Die DE 1 872 594 U offenbart eine Pick-Up Aufnehmertrommel, wobei beide Hälften an einer Welle, die mit zwei Naben versehen ist, montiert werden. Die Trommelhälften werden zur Montage an die Naben angeschraubt, wobei die Naben fest mit der Welle verbunden sind.

Gemäß dieser Ausgestaltung ist das Halterungselement mit Bohrungen versehen, wobei in den Bohrungen Halteelemente einschraubbar sind, auf welche wiederum Zinken aufgeschraubt sind. Diese Ausgestaltung hat den Nachteil, dass alle Zinkenpaare bei einem Austausch einzeln mittelbar an der Welle befestigt werden müssen, da die Trägerelemente nicht auf einfache Weise austauschbar mit der Welle verbunden sind.

Der Erfindung liegt die Aufgabe zugrunde, einen Zinkenträger anzugeben, der einfach und schnell an der Welle montiert bzw, ausgetauscht werden kann.

Die Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

In bekannter Weise umfasst ein Zinkenträger für einen Erntegutaufnehmer wenigstens zwei Zinken, wobei ein Zinken einen Befestigungsbereich aufweist. Über den Befestigungsbereich ist der Zinken mit einem Trägerelement verbindbar.

Erfindungsgemäß umfasst der Zinkenträger wenigstens zwei Trägerelemente, an welchen je wenigstens ein Zinken mit seinem Befestigungsbereich befestigbar ist. Des Weiteren weisen die Trägerelemente einen Verbindungsbereich auf, über welchen der Zinkenträger mit der Welle drehfest mittelbar oder unmittelbar verbindbar ist. Ferner umfasst der Zinkenträger ein Spannelement, welches die Trägerelemente lösbar gegenüber der Welle verspannt.

Auf diese Weise können die Zinken tragenden Trägerelemente auf einfache Weise verdrehsicher an der Welle festgelegt werden.

Gemäß einer weiteren vorteilhaften Ausgestaltung der Erfindung kann ein Trägerelement als Halbschale ausgebildet sein, wobei das Trägerelement Haltestrukturen aufweist, welche in den Befestigungsbereich eines Zinken eingreifen können und diesen in axialer Richtung und Umfangsrichtung formschlüssig festlegen.

Vorzugsweise kann das Spannelement in Form einer Spannschelle ausgebildet sein, wobei diese die Trägerelemente, insbesondere die zwei Halbschalen, umgreifen kann. Das Spannelement umgreift das Trägerelement vorzugsweise im Befestigungsbereich der Zinken. Dadurch können zum einen die Zinken am Trägerelement und zum anderen die Trägerelemente selbst verdrehgesichert mit der Welle verbunden werden. Bevorzugt umgreift eine Spannschelle die Halbschalen im Bereich der Haltestrukturen. Die Haltestrukturen legen also die Zinken in axialer Richtung und Umfangsrichtung fest und die Spannschelle diese Radialrichtung.

Die Spannschelle kann vorzugsweise ein Federstahlband aufweisen.

Gemäß einer weiteren vorteilhaften Ausgestaltung können die Trägerelemente, insbesondere die Halbschalen, scharnierartig verbunden sein. Dies erlaubt eine einfachere Bedienung als ein reines Stecksystem.

Die Trägerelemente können in ihrem Befestigungsbereich derart ausgelegt sein, dass diese die Zinken auch in radialer Richtung, insbesondere kraftschlüssig, festlegen. Dies erleichtert die Montage an der Welle. Eine endgültige Fixierung kann über die Spannschelle erfolgen, die vorzugsweise aus Metall ausgebildet sein kann.

In bekannter Weise kann ein Zinken wenigstens einen insbesondere zwei Spiralwicklungsbereiche umfassen, wodurch dieser eine gewisse Nachgiebigkeit erhält, und die Zinken nicht so schnell abreißen. Für einen Zinken, insbesondere einen Doppelzinken, der zwei Spiralwicklungsbereiche aufweist, liegt der Befestigungsbereich zwischen den beiden Spiralwicklungsbereichen. Dieser Befestigungsbereich ist bei herkömmlichen Zinken bügelartig ausgebildet bzw. durch einen in U-Form oder V-Form gebogenen Draht gebildet. Wie beispielsweise aus der DE 10 2006 027 078 A1 bekannt, wird in diesen Befestigungsbereich eine Schraube hindurchgesteckt und gegenüberliegend fixiert. Der Zinken ist dann in radialer und axialer Richtung formschlüssig und in Umfangsrichtung kraftschlüssig fixiert.

Erfindungsgemäß kann der Befestigungsbereich am Trägerelement als eine zu der Zinkenform korrespondierende Erhebung ausgebildet sein.

Im Übergang zur Welle weist das Trägerelement einen Verbindungsbereich auf, um eine vorzugsweise formschlüssige Drehsicherung gegenüber der Welle herzustellen. Insbesondere weist der Verbindungsbereich dazu eine polygone Kontur auf. Diese ist korrespondierend zur Welle oder einem Zwischenstück ausgebildet. Bevorzugt liegt im Verbindungsbereich des Zinkenträgers eine Sechskantgeometrie zur Verbindung mit einer Sechskantwelle vor.

Gemäß einer weiteren vorteilhaften Ausgestaltung der Erfindung kann der Zinkenträger Stützelemente umfassen, welche Stützstrukturen aufweisen, die einen wenigstens eine Spiralwicklung aufweisenden Zinken axial durchgreifen. Dadurch erfolgt eine radiale Stabilisierung des Zinkens. Der Durchmesser der Stützstruktur des Stützelements ist dabei geringfügig kleiner als der Durchmesser der Spiralwicklung. Dies erlaubt bei Belastung des Zinkens eine Einschnürung der Spiralwicklung.

Indem die Stützstruktur die Spiralwicklung durchgreift, wird erreicht, dass bei hoher Belastung der Zinken vor einer Überlastung insbesondere am Befestigungsbereich geschützt wird. Zudem wird einer Materialermüdung des Zinkens entgegengewirkt, da sich der Zinkenschenkel unmittelbar an der Stützstruktur abstützt.

Da in der Praxis die vorrangige Bruchstelle im Befestigungsbereich liegt, wird durch die Stützstruktur eine Verlustsicherung eines dort gebrochenen Zinkens bereitgestellt. Dadurch werden Folgeschäden an nachfolgenden Erntemaschinen oder Tieren vermieden.

Vorzugsweise ist die die Spiralwicklung des Zinkens durchgreifende Stützstruktur aus einem Kunststoff ausgebildet.

Dies führt dazu, dass bei starker Belastung die Spiralwicklung "weich" an der Stützstruktur zur Anlage kommt. Damit wird jegliche Kerbwirkung auf die Spiralwicklung unterbunden, was die Reibung auf die Spiralwicklung reduziert.

Bevorzugt ist das Stützelement korrespondierend zum Trägerelement gestaltet. Dies bedeutet, dass das Trägerelement und das Stützelement vorzugsweise den gleichen Kreissektor abbilden. Auf diese Weise kann eine Baugruppe aus Stützelement und Trägerelement hergestellt werden, wodurch die Montage des Gesamtsystems erleichtert wird.

Das Stützelement wird vorzugsweise als Spritzgussteil hergestellt und kann einen Übergangsbereich aufweisen, der das Trägerelement drehfest mit der Welle verbindet.

Diese Ausgestaltung hat den Vorteil, dass insbesondere für den Fall, dass das Trägerelement und das Stützelement als Spritzgussteil ausgebildet sind, diese in vorteilhafter Weise eine axiale Entformungsrichtung aufweisen können. Dadurch kann ein breiter Anlagebereich des Stützelements mit der Welle erreicht werden.

Insbesondere sind das Stützelement und das Trägerelement derart aufeinander abgestimmt, dass diese jeweils einen Verbindungsbereich aufweisen, über den die beiden Elemente wenigstens temporär verbindbar sind, Dadurch kann in einer Vormontage eine Baugruppe hergestellt werden, was die endgültige Montage an der Welle deutlich vereinfacht.

Eine solche Verbindung kann als Schnappverbindung ausgebildet sein und/oder über das Spannelement hergestellt werden.

Dazu können das Trägerelement und Stützelement derart aufeinander abgestimmt sein, dass das Trägerelement Rastbereiche aufweist, in welche am Stützelement angeformte Rasthaken eingreifen können und das Stützelement und Trägerelement in Axialrichtung form/kraftschlüssig zueinander festlegen, Diese Verbindung kann durch die Spannschellen weiter verfestigt werden.

In einer bevorzugten Weiterbildung können axial zwei Stützelemente beidseitig mit dem Trägerelement verbunden werden, wobei Trägerelement und Stützelement derart aufeinander abgestimmt sind, dass die Rasthaken an die in Anbaurichtung des Stützelements abgewandten Rastbereichen des Trägerelements eingreifen. Dadurch kann durch ein Übergreifen der Rasthaken eine stabilere Halterung erreicht werden.

Für den Fall, dass der Zinkenträger Doppelzinken umfasst, kann vorzugsweise beidseitig ein separates Stützelement vorgesehen sein. Die beiden Stützelemente können über ein zentral angeordnetes Trägerelement verbunden werden.

Auf diese Weise kann beispielsweise aus einem als Halbschale ausgebildeten Trägerelement und zwei seitlich ineinandergreifenden Stützelementen eine mehrere Zinken, insbesondere Doppelzinken, tragende Zinkenträgerhälfte bereitgestellt werden, Diese kann in Verbindung mit einer weiteren Hälfte mithilfe einer Spannschelle an einer Welle fixiert werden. Dies erlaubt eine einfache Befestigungsmöglichkeit mehrerer Doppelzinken an einer Welle, ohne dass die Welle demontiert werden müsste.

Gemäß einer besonders vorteilhaften Weiterbildung der Erfindung kann das Stützelement insbesondere an seiner Stützstruktur eine Führungsfläche aufweisen, die eine Führung für den Zinken ermöglicht.

Vorzugsweise kann der Zinkenträger derart ausgebildet sein, dass Spannschelle und Trägerelement so aufeinander abgestimmt sind, dass sich bei verspannter Spannschelle über den Umfang Bereiche unterschiedlicher Flächenpressung ergeben.

Dies hat zur Folge, dass eine höhere Vorspannung durch die Spannschelle, die bevorzugt einen Federstahlspannring aufweist, erzielt wird, da die Bereiche geringerer Anpressung zu einer Form der Spannschelle, insbesondere des Spannrings, führen, die polygonartig ist.

So kann bei einer Schrumpfung des Trägerelements eine Schrumpfung solange toleriert werden, solange die polygonartige Form der Spannschellen erhalten bleibt, wobei immer noch eine ausreichende Spannkraft bereitgestellt wird, um die spielfreie Verdrehsicherheit gegenüber der Welle zu gewährleisten. Die Differenz von Außen- und Innenkreisradius beträgt zwischen 2% und 10% des Außenkreisdurchmessers.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Explosionsansicht eines erfindungsgemäßen Zinkenträgers;
- Fig. 2: eine perspektivische Ansicht auf die Trägerhalbschale mit einem Doppelzinken;
- Fig. 3: eine Explosionsansicht eines erfindungsgemäßen Zinkenträgers;
- Fig. 4: eine perspektivische Ansicht eines erfindungsgemäßen Zinkenträgers;
- Fig. 5a: eine perspektivische Ansicht eines Stützelements;
- Fig. 5b: eine perspektivische Ansicht eines Stützelements;
- Fig. 6a: eine Seitenansicht eines zusammengesetzten Zinkenträgers;
- Fig. 6b: eine Schnittansicht des erfindungsgemäßen Zinkenträgers gemäß Fig. 6a;
- Fig. 6c: eine Detailansicht gemäß Fig. 6b;
- Fig. 7a: eine Vorderansicht eines erfindungsgemäßen Zinkenträgers;
- Fig. 7b: eine Schnittansicht des erfindungsgemäßen Zinkenträgers gemäß Fig. 7a, und
- Fig. 7c: eine Detailansicht gemäß Fig. 7b.

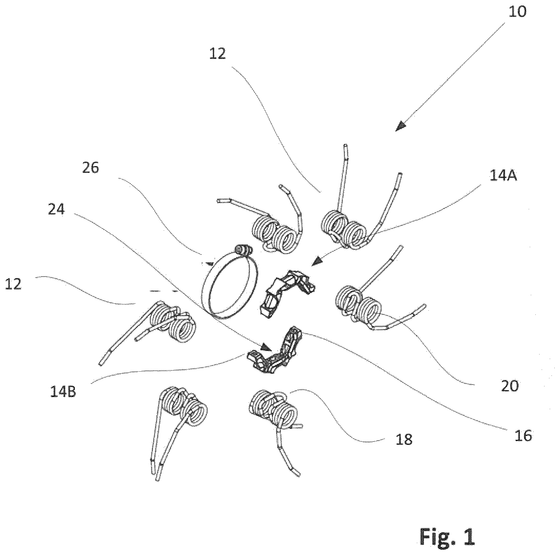

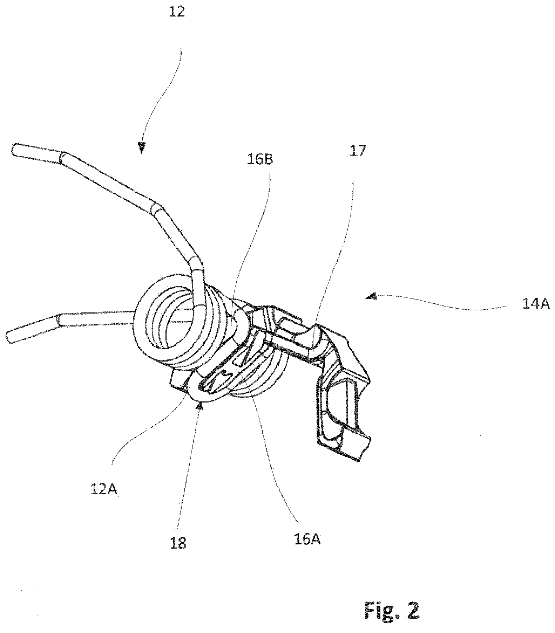

Fig. 1 zeigt eine Explosionsansicht eines erfindungsgemäßen Zinkenträgers 10. Der Zinkenträger 10 umfasst sechs Doppelzinken 12, die von Trägerhalbschalen 14A, 14B getragen werden. Die Trägerhalbschalen 14A, 14B weisen Befestigungsstrukturen 16 auf, welche die Doppelzinken 12 in axialer Richtung und in Umfangsrichtung formschlüssig fixieren, indem die Befestigungsstrukturen 16 den Befestigungsbereich 18, der zwischen den Federspiralen 20 des Doppelzinken 12 liegt, durchgreifen. Auf diese Weise trägt eine Trägerhalbschale 14A, 14B je drei Doppelzinken 12. Die Aufnahme der Doppelzinken 12 in der Trägerhalbschale 14A ist in Fig. 2 näher beschrieben.

Die so besetzten Trägerhalbschalen 14A, 14B können eine (nicht dargestellte) Welle, insbesondere eine Sechskantwelle, umgreifen. Die Trägerhalbschalen 14A, 14B weisen in ihrem radial innenliegenden Bereich einen Verbindungsbereich 24 zur drehfesten Verbindung mit der Welle auf, um eine verdrehsichere Lagerung an der Welle zu ermöglichen. Zudem umfasst der Zinkenträger 10 eine Spannschelle 26, welche die Doppelzinken 12 und die Trägerhalbschalen 14A, 14B mit der Welle verspannt. Die Spannschelle 26 wird bekanntermaßen mit einem Schraubelement verspannt. Auf diese Weise werden mit nur einer Schraube gleichzeitig sechs Doppeizinken 12 an einer Welle befestigt bzw. getauscht.

Fig. 2 zeigt eine perspektivische Ansicht einer Trägerhalbschale 14A, wobei ein Doppelzinken 12 mit seinem Befestigungsbereich 12A dargestellt ist. Der Befestigungsbereich 12A des Doppelzinkens 12 ist U-förmig ausgebildet. Dieser Bereich ist in radialer Richtung von einer Befestigungsstruktur 16A durchgriffen und seitlich durch eine Befestigungsstruktur 16B festgelegt. Diese legt dadurch den Doppelzinken 12 in axialer Richtung und in Umfangsrichtung in der Drehrichtung des Zinkenträgers formschlüssig fest, Die Befestigungsstruktur 16 kann so gestaltet sein, dass diese den Doppelzinken 12 wenigstens vorübergehend auch in Radialrichtung festhält. Dies erfolgt im dargestellten Ausführungsbeispiel durch eingebrachte Nuten 17, in welchen der Zinken 12 wenigstens temporär gehalten und geführt wird. Die endgültige Fixierung der Doppelzinken 12 erfolgt dann durch die in Fig. 1 dargestellte Spannschelle 26.

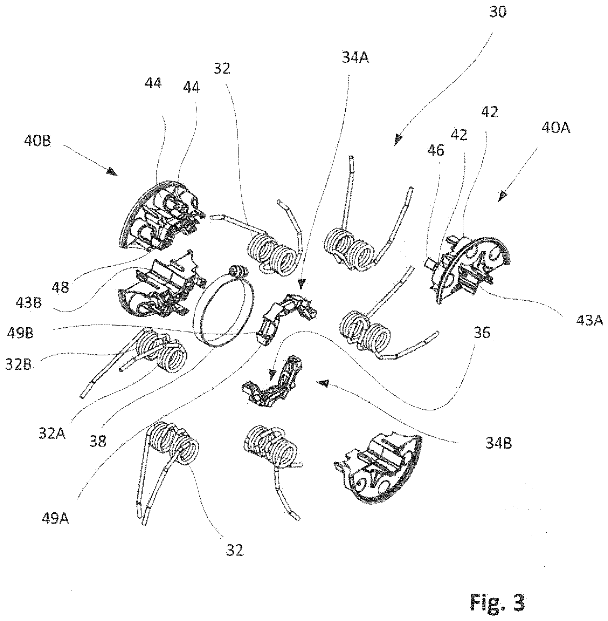

Fig. 3 zeigt eine Explosionsansicht eines erfindungsgemäßen Zinkenträgers 30. Der Zinkenträger 30 umfasst, wie in Fig. 1 beschrieben, sechs Doppelzinken 32, von welchen je drei an einer Trägerhalbschale 34A, 34B befestigt werden. Diese Befestigung erfolgt über die Befestigungsstrukturen 36, wie in Fig. 2 beschrieben, und mittels einer Spannschelle 38. Zugeordnet zu einer Trägerhalbschale 34A, 34B umfasst der Zinkenträger 30 je zwei Stützelemente 40A, 40B, die jeweils Stützstrukturen 42, 44 aufweisen, wobei eine Stützstruktur 42 einen zugeordneten Spiralfederbereich 32A durchgreift. Die Stützelemente 40A, 40B weisen ebenfalls je einen Verbindungsbereich 43A, 43B auf, über welchen sich das Stützelement 40A, 40B an der Welle abstützt und an diese verdrehsicher gelagert ist. Auf diese Weise werden die Doppelzinken 32 zuverlässig durch die Stützstrukturen 42 geführt und gestützt, wobei die Doppelzinken 32 dadurch verlustsicher gehalten werden. Das Stützelement 40B ist analog aufgebaut, so dass sich eine Abstützung beider Spiralfederbereiche 32A, 32B eines Doppelzinkens 32 ergibt. Die Stützstrukturen 42, 44 weisen an ihrem stirnseitigen, der Trägerhalbschale 34A, 34B zugeordneten, Ende Rastmittel 46, 48 auf, welche in Rastflanken 49A, 49B an der Trägerhalbschale 34A eingreifen. Die Stützelemente 40A, 40B sind so über die Trägerhalbschale 34A in radialer als auch axialer Richtung formschlüssig fixiert. Dadurch ergibt sich eine Vereinfachung des Zusammenbaus des Zinkenträgers 30, da eine Trägerhalbschale 34A, 34B mit den daran angeordneten Doppelzinken 32 und zwei Stützelementen 40A, 40B eine Zinkenträgerhalbschale 30A als Baugruppe bereitstellt. Zwei solche Baugruppen 30A, 30B können dann auf einfache Weise mit Hilfe der Spannschelle 38 an der Welle festgelegt werden.

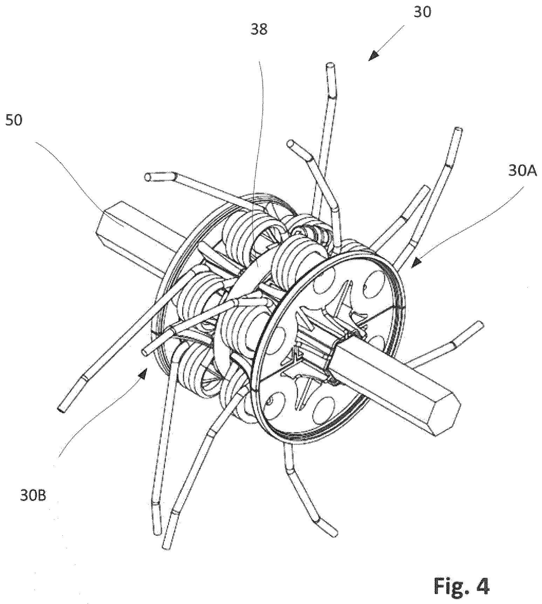

Fig. 4 zeigt eine perspektivische Ansicht eines Zinkenträgers 30, wobei dieser aus zwei Zinkenträgerhälften 30A, 30B zusammengesetzt ist und durch die Spannschelle 38 an einer Welle 50 fixiert ist.

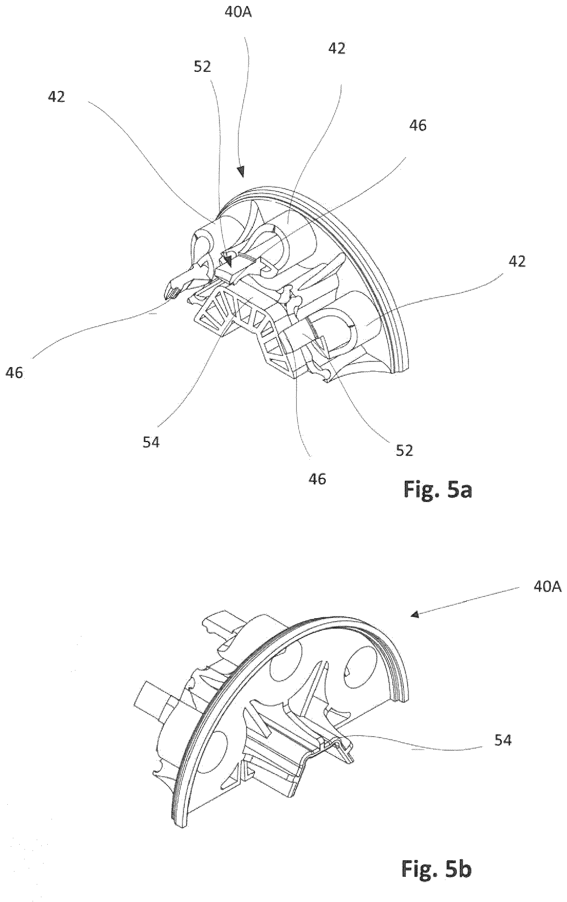

Fig. 5a, 5b zeigen je eine perspektivische Ansicht eines Stützelements 40. Deutlich zu erkennen sind die Stützstrukturen 42, die an ihrem stirnseitigen Ende Rastmittel 46 aufweisen, welche, wie in Fig. 3 beschrieben, in korrespondierende Rastflanken 49A, 49B eingreifen, wodurch die Stützelemente 40A, 40B und die Trägerhalbschale in axialer Richtung formschlüssig zueinander fixiert sind. Zudem ist eine Anlagefläche 52 vorgesehen, in welcher die Spannschelle 38 geführt werden kann und an welcher die Spannschelle 38 die Rastmittel 46 in Eingriff mit den Rastflanken 49A, 49B der Trägerhalbschale halten kann. Ferner ist ein Übergangsbereich 54 dargestellt, über welchen die Trägerhalbschale mit der Welle verbunden werden kann. Der Verbindungsbereich der Trägerhalbschale liegt dann am Übergangsbereich 54 drehfest zu diesem an, wodurch somit die Trägerhalbschale über den Übergangsbereich 54 drehfest mit der Welle verbunden werden kann. Die Spannkraft der Spannschelle 38 wird über das Trägerelement (nicht gezeigt) an den Übergangsbereich 54 und darüber auf die Welle (nicht gezeigt) übertragen.

Der Übergangsbereich erstreckt sich, wie in Fig. 5b dargestellt, auch auf die dem Trägerelement abgewandte Seite und schafft damit eine größere Anlagefläche und zudem kann über diese Erstreckung ein Soll-Einbauabstand vorgegeben werden.

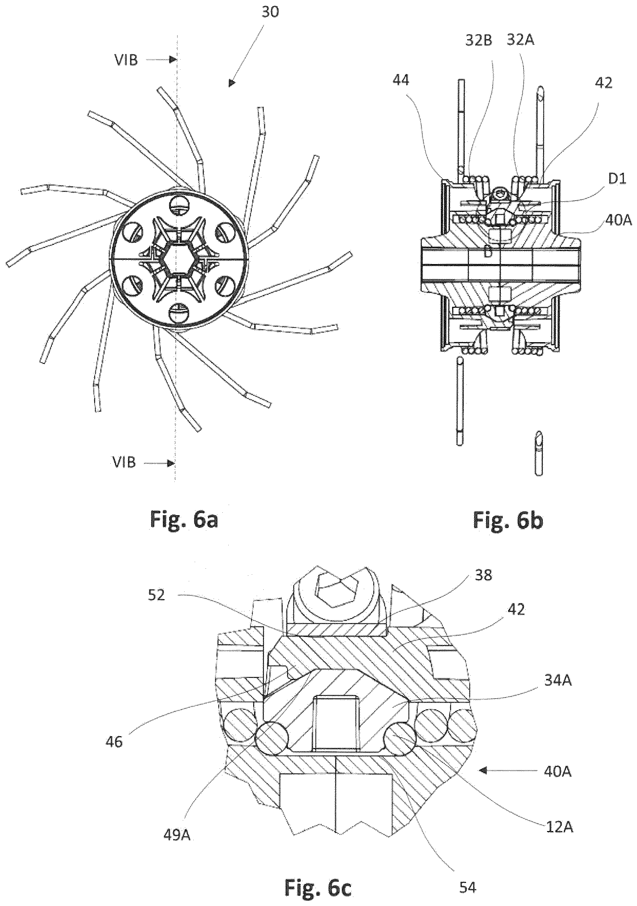

Fig. 6a zeigt eine Seitenansicht eines zusammengesetzten Zinkenträgers 30 analog Fig. 3, in welchem der Schnitt VIB-VIB eingezeichnet ist, die in Fig. 6b dargestellt ist. Es ist gezeigt, wie die Stützstrukturen 42, 44 jeweils die Spiralfederbereiche 32A, 32B des Doppelzinkens 12 durchsetzen. In Fig. 6b ist ein Detailbereich D1 markiert, der in Fig. 6c näher erläutert ist. Der Zinkenträger 30 weist vier gleichartige Stützelemente 40A, 40B auf, wie in Fig. 5a, 5b beschrieben.

Fig. 6c zeigt den Detailbereich D1 der Fig. 6b. Das Stützelement 40A durchsetzt mit seiner Stützstruktur 42 den Spiralbereich 32A des an der Trägerhalbschale 34A gelagerten Doppelzinkens 12. Die Spannschelle 38 ist an der Anlagefläche 52 der Stützstruktur 42 geführt, Gegenüberliegend der Anlagefläche 52 ist ein Rastmittel 46 angeordnet, das mit der Rastflanke 49A einen Kraftformschluss eingeht. Durch die durch die Spannschelle 38 erzeugte Radialpressung wird einerseits die Verbindung von Rastflanke 49A und Rastmittel 46 aufrechterhalten und zum anderen wird der Befestigungsbereich 12A des Doppelzinkens 12 zwischen der Trägerhalbschale 34A und dem Übergangsbereich 54 der Stützstruktur42 geklemmt. Das Rastmittel 46 ist auf der dem Stützelement 40A gegenüberliegenden Seite der Trägerhalbschale 34A angeordnet. Auf diese Weise führen die über den Umfang abwechselnd übergreifend angeordneten Stützstrukturen 42, 44 der gegenüber angeordneten Stützelemente 40A, 40B zu einer stabilen Verbindung der Trägerhalbschale 34A und der Stützelemente 40A, 40B zu einer Zinkenträgerhalbschale 30A.

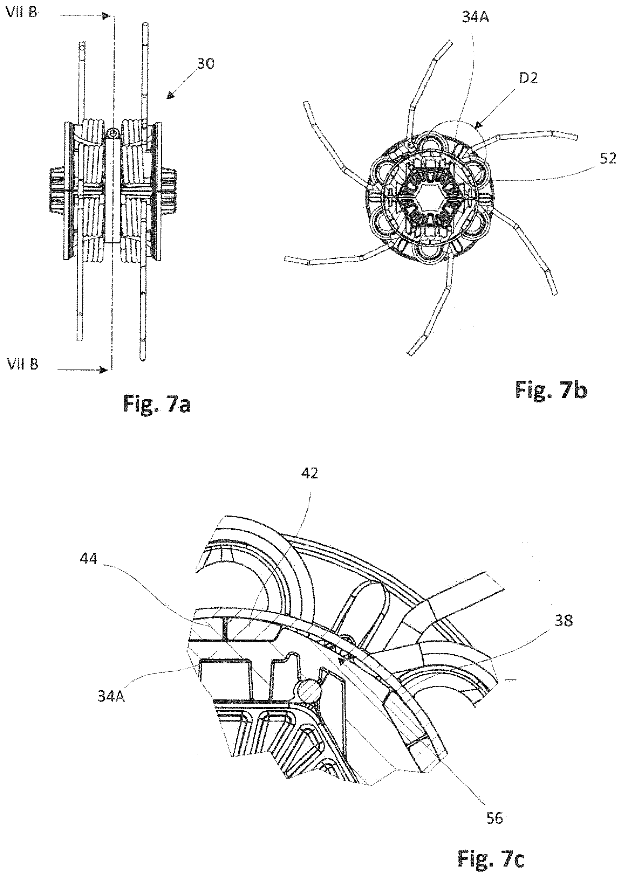

Fig. 7a zeigt eine Vorderansicht eines erfindungsgemäßen Zinkenträgers 30 mit eingezeichneter Schnittlinie VIIB-VIIB.

Fig. 7b zeigt eine Schnittansicht des erfindungsgemäßen Zinkenträgers 30. Fig. 7b zeigt die Rippenstruktur des Übergangsbereichs 52 zur Übertragung der Klemmkräfte von der Trägerhalbschale 34A auf die Welle. Die Rippenstruktur erlaubt eine ideale großflächige Krafteinleitung bei geringem Werkstoffaufwand. Ferner ist in Fig. 7b der in Fig. 7c näher erläuterte Detailbereich D2 markiert,

Fig. 7c zeigt den Detailbereich D2, wie in Fig. 7b angedeutet. Der Spannring 38 liegt über dem von der Trägerhalbschale 34A wenigstens teilweise übergreifenden Stützstrukturen 42, 44 gebildeten Führungsbereich. Deutlich erkennbar an dieser Detailansicht ist, dass der Zwischenbereich 56 der Trägerhalbschale 34A innerhalb des Hüllkreises mit einem durch die Stützstrukturen 42, 44 vorgegebenen Radius liegt. Durch diese Anordnung übt die Spannschelle 38 im Bereich der Stützstrukturen 42, 44 eine höhere Flächenpressung auf die Trägerhalbschale 34A aus als im Zwischenbereich 56. Reduziert sich im Laufe der Zeit durch Materialschrumpfung der Durchmesser der durch die Spannschelle 38 umschlossenen Anordnung, kann diese dann auch bei verringertem Durchmesser eine spielfreie, drehfeste Verbindung mit der Welle ermöglichen. Dies erlaubt durch reduzierten Verschleiß lange Betriebszeiten, ohne dass eine Nachstellung der Spannschelle 38 notwendig wird.

### Bezugszeichenliste

- 10: Zinkenträger
- 12: Doppelzinken
- 12A: Befestigungsbereich
- 14A: Trägerhalbschale
- 14B: Trägerhalbschale
- 16A: Befestigungsstruktur
- 16B: Befestigungsstruktur
- 17: Nut
- 18: Befestigungsbereich
- 20: Federspirale
- 24: Verbindungsbereich
- 26: Spannschelle
- 30: Zinkenträger
- 30A: Zinkenträgerhalbschale
- 30B: Zinkenträgerhalbschale
- 32: Doppelzinken
- 32A: Spiralfederbereich
- 32B: Spiralfederbereich
- 34A: Trägerhalbschale
- 34B: Trägerhalbschalen
- 36: Befestigungsstruktur
- 38: Spannschelle
- 40A: Stützelement
- 40B: Stützelement
- 42: Stützstruktur
- 43A: Verbindungsbereich
- 43B: Verbindungsbereich
- 44: Stützstruktur
- 46: Rastmittel
- 48: Rastmittel
- 49A: Rastflanke
- 49B: Rastflanke
- 50: Welle
- 52: Übergangsbereich
- 54: Übergangsbereich
- 56: Zwischenbereich

## Patentansprüche

1. Zinkenträger (10, 30) für einen Erntegutaufnehmer zur Verbindung von wenigstens zwei Zinken (12) mit einer Welle (50), wobei ein Zinken (12, 32) einen Befestigungsbereich (18) aufweist, wobei der Zinkenträger (10, 30) wenigstens zwei Trägerelemente (14A, 14B, 34A, 34B) umfasst, an welchen je wenigstens ein Zinken (12, 32) mit seinem Befestigungsbereich (18) befestigbar ist, wobei ferner die Trägerelemente (14A, 14B, 34A, 34B) einen Verbindungsbereich (24) aufweisen, über welchen eine drehfeste Verbindung mit der Welle (50) herstellbar ist, **dadurch gekennzeichnet, dass** der Zinkenträger (10, 30) ein Spannelement (26, 38) aufweist, welches die Trägerelemente (14A, 14B, 34A, 34B) lösbar gegenüber der Welle (50) verspannt.

2. Zinkenträger nach Anspruch 1, **dadurch gekennzeichnet, dass** das Spannelement (26, 38) die Trägerelemente (14A, 14B, 34A, 34B) umgreift.

3. Zinkenträger nach einem der vorangehenden Ansprüche, **dadurch gekennzeichnet, dass** jeder Zinken (12, 32) wenigstens eine Spiralwicklung (20, 32A, 32B) aufweist.

4. Zinkenträger nach Anspruch 3, **dadurch gekennzeichnet, dass** der Zinken (12, 32) zwei Spiralwicklungen (20, 32A, 32B) aufweist, zwischen welchen der Befestigungsbereich (18) liegt.

5. Zinkenträger nach Anspruch 3 und 4, **dadurch gekennzeichnet, dass** das Trägerelement (14A, 14B, 34A, 34B) mit einem Stützelement (40A, 40B) verbindbar ist, wobei das Stützelement (40A, 40B) Stützstrukturen (42, 44) aufweist, die die Spiralwicklung (32A, 32B) axial durchgreifen.

6. Zinkenträger nach Anspruch 5, **dadurch gekennzeichnet, dass** das Stützelement (42, 44) Raststrukturen (46, 48) aufweist, die mit korrespondierenden Raststrukturen (49A, 49B) am Trägerelement (34A, 34B) verrastbar sind.

7. Zinkenträger nach Anspruch 6, **dadurch gekennzeichnet, dass** die Raststrukturen (46, 48) des Stützelements und die Raststrukturen (49A, 49B) des Trägerelements derart angeordnet sind, dass die Rastposition auf der Seite des Trägerelements (34A, 34B) liegt, die axial vom Stützelement (40A, 40B) abgewandt ist, wodurch das Stützelement (40A, 40B) das Trägerelement (34A, 34B) wenigstens teilweise übergreift.

8. Zinkenträger nach einem der vorangehenden Ansprüche 5 bis 7, **dadurch gekennzeichnet, dass** das Stützelement (40A, 40B) einen Übergangsbereich (54) aufweist, über den das Trägerelement (34A, 34B) drehfest mit der Welle (50) verbindbar ist.

9. Zinkenträger nach einem der vorangehenden Ansprüche, **dadurch gekennzeichnet, dass** das Spannelement als Spannschelle (26, 38) ausgebildet ist, und die Trägerelemente (34A, 34B) derart ausgebildet sind, so dass sich die Spannschelle (26, 38) polygonartig an die Trägerelemente (34A, 34B) anlegt.

10. Zinkenträger nach einem der vorangehenden Ansprüche 5-8, **dadurch gekennzeichnet, dass** ein Trägerelement (34A, 34B) mit zwei Stützelementen (40A, 40B) verbunden ist.

11. Zinkenträger nach einem der vorangehenden Ansprüche, **dadurch gekennzeichnet, dass** ein Zinken ein Doppelzinken (32) ist.

12. Zinkenträger nach einem der vorangehenden Ansprüche 2 bis 11, **dadurch gekennzeichnet, dass** das Spannelement (26, 38) als Spannschelle (26, 36) ausgebildet ist.

## Claims

1. Tine carrier (10, 30) for a crop collecting device, for connecting at least two tines (12) to a shaft (50), wherein one tine (12, 32) has a fastening region (18), said tine carrier (10, 30) comprising at least two carrier elements (14A, 14B, 34A, 34B) to each of which at least one tine (12, 32) can be fastened via its fastening region (18), said carrier elements (14A, 14B, 34A, 34B) further having a connecting region (24) which can be used to produce a rotationally fixed connection to the shaft (50), **characterized in that** the tine carrier (10, 30) has a clamping element (26, 38) which clamps the carrier elements (14A, 14B, 34A, 34B) against the shaft (50) in a releasable manner.

2. Tine carrier according to claim 1, **characterized in that** the clamping element (26, 38) engages round the carrier elements (14A, 14B, 34A, 34B).

3. Tine carrier according to any one of the preceding claims, **characterized in that** each tine (12, 32) has at least one spiral winding (20, 32A, 32B).

4. Tine carrier according to claim 3, **characterized in that** the tine (12, 32) has two spiral windings (20, 32A, 32B) between which the fastening region (18) is located.

5. Tine carrier according to claims 3 and 4, **characterized in that** the carrier element (14A, 14B, 34A, 34B) can be connected to a support member (40A, 40B), said support member (40A, 40B) having supporting structures (42, 44) which engage axially through the spiral winding (32A, 32B).

6. Tine carrier according to claim 5, **characterized in that** the support element (42, 44) has latching structures (46, 48) which can latched with corresponding latching structures (49A, 49B) on the carrier element (34A, 34B).

7. Tine carrier according to claim 6, **characterized in that** the latching structures (46, 48) of the support member and the latching structures (49A, 49B) of the carrier element are arranged in such a way that the latching position lies on the side of the carrier element (34A, 34B) which is axially remote from the support member {40A, 40B), whereby the support member (40A, 40B) at least partially engages over the carrier element (34A, 34B).

8. Tine support according to any one of claims 5 to 7 above, **characterized in that** the support member (40A, 40B) has a transition region (54) which can be used to connect the carrier element (34A, 34B) to the shaft (50) in a rotationally fixed manner.

9. Tine carrier according to any one of the preceding claims, **characterized in that** the clamping element is designed as a clamping collar (26, 38), and that the carrier elements (34A, 34B) are designed in such a way that the clamping collar (26, 38) abuts the carrier elements (34A, 34B) in a polygon-like manner.

10. Tine carrier according to any one of claims 5 to 8 above,
**characterized in that** a carrier element (34A, 34B) is connected to two support members (40A, 40B).

11. Tine carrier according to any one of the preceding claims, **characterized in that** one tine is a double tine (32).

12. Tine carrier according to any one of claims 2 to 11 above, **characterized in that** the clamping element (26, 38) is designed as a clamping collar (26, 36).

## Revendications

1. Porte-dents (10, 30) pour une récolteuse permettant la liaison d'au moins deux dents (12) à un arbre (50), dans lequel une dent (12, 32) présente une zone de fixation (18), dans lequel le porte-dents (10, 30) comprend au moins deux éléments de support (14A, 14B, 34A, 34B), auxquels respectivement au moins une dent (12, 32) peut être fixée avec sa zone de fixation (18), dans lequel en outre les éléments de support (14A, 14B, 34A, 34B) présentent une zone de liaison (24), par l'intermédiaire de laquelle une liaison solidaire en rotation avec l'arbre (50) peut être établie, **caractérisé en ce que** le porte-dents (10, 30) présente un élément de serrage (26, 38), lequel serre les éléments de support (14A, 14B, 34A, 34B) de manière détachable par rapport à l'arbre (50).

2. Porte-dents selon la revendication 1, **caractérisé en ce que** l'élément de serrage (26, 38) entoure les éléments de support (14A, 14B, 34A, 34B).

3. Porte-dents selon l'une quelconque des revendications précédentes, **caractérisé en ce que** chaque dent (12, 32) présente au moins un enroulement en spirale (20, 32A, 32B).

4. Porte-dents selon la revendication 3, **caractérisé en ce que** la dent (12, 32) présente deux enroulements en spirale (20, 32A, 32B), entre lesquels se situe la zone de fixation (18).

5. Porte-dents selon les revendications 3 et 4, **caractérisé en ce que** l'élément de support (14A, 14B, 34A, 34B) peut être relié à un élément d'appui (40A, 40B), dans lequel l'élément d'appui (40A, 40B) présente des structures d'appui (42, 44), qui traversent axialement l'enroulement en spirale (32A, 32B).

6. Porte-dents selon la revendication 5, **caractérisé en ce que** l'élément d'appui (42, 44) présente des structures d'encliquetage (46, 48), qui peuvent être encliquetées avec des structures d'encliquetage (49A, 49B) correspondantes sur l'élément de support (34A, 34B).

7. Porte-dents selon la revendication 6, **caractérisé en ce que** les structures d'encliquetage (46, 48) de l'élément d'appui et les structures d'encliquetage (49A, 49B) de l'élément de support sont disposées de telle sorte que la position d'encliquetage se situe sur la face de l'élément de support (34A, 34B) qui est opposée axialement à l'élément d'appui (40A, 40B), ce qui a pour effet que l'élément d'appui (40A, 40B) enserre au moins en partie l'élément de support (34A, 34B) par le dessus.

8. Porte-dents selon l'une quelconque des revendications 5 à 7, **caractérisé en ce que** l'élément d'appui (40A, 40B) présente une zone de transition (54), par l'intermédiaire de laquelle l'élément de support (34A, 34B) peut être relié de manière solidaire en rotation à l'arbre (50).

9. Porte-dents selon l'une quelconque des revendications précédentes, **caractérisé en ce que** l'élément de serrage est réalisé sous la forme d'un collier de serrage (26, 38), et les éléments de support (34A, 34B) sont réalisés de telle sorte que le collier de serrage (26, 38) s'applique de manière polygonale contre les éléments de support (34A, 34B).

10. Porte-dents selon l'une quelconque des revendications 5 à 8, **caractérisé en ce qu'un** élément de support (34A, 34B) est relié à deux éléments d'appui (40A, 40B).

11. Porte-dents selon l'une quelconque des revendications précédentes, **caractérisé en ce qu'une** dent est une dent double (32).

12. Porte-dents selon l'une quelconque des revendications 2 à 11, **caractérisé en ce que** l'élément de serrage (26, 38) est réalisé sous la forme d'un collier de serrage (26, 36).
